# FASCICULE DE BREVET EUROPEEN

(11) **EP 2 554 007 B1**
(45) Date de publication et mention de la délivrance du brevet: **01.05.2019**
(21) Numéro de dépôt: 11719319.3
(22) Date de dépôt: 30.03.2011
(51) Int. Cl.: H04W 74/08

(54) **PROCÉDÉ ET DISPOSITIF DE RÉGULATION D'ÉMISSION DANS UN RÉSEAU DE TÉLÉCOMMUNICATION SANS FIL**
VERFAHREN UND VORRICHTUNG ZUR EMISSIONSREGULIERUNG IN EINEM DRAHTLOSEN TELEKOMMUNIKATIONSNETZ
METHOD AND DEVICE FOR REGULATING EMISSION IN A WIRELESS TELECOMMUNICATION NETWORK

(30) Priorité: 31.03.2010 FR 1052386
(43) Date de publication de la demande: 06.02.2013
(73) Titulaire: Orange, 75015 Paris (FR)
(72) Inventeur: BROWN, Patrick, F-06800 Cagnes Sur Mer (FR); GALTIER, Jérôme, F-06000 Nice (FR)
(74) Mandataire: Cabinet Beau de Loménie
(86) Numéro de dépôt international: PCT/FR2011/050716
(87) Numéro de publication internationale: WO 2011/121241

(56) Documents cités:
- WO-A1-2007/051946
- US-A1- 2005 169 221
- US-A1- 2009 213 815

## Description

La présente invention concerne le domaine des réseaux de télécommunication sans fil, en particulier des réseaux locaux sans fil ou WLAN (de l'anglais "Wireless Local Access Network") conformes à la famille de normes IEEE 802.11.

De tels réseaux sont également nommés réseaux Wi-Fi. Ils sont utilisés pour mettre en réseau, dans de nombreuses applications, des stations (par exemple des ordinateurs, des assistants personnels et des périphériques).

La norme 802.11 définit dans le document "IEEE 802.11a-1999, IEEE 802.11b-1999, IEEE-802.11d-2001, Part 11 : wireless LAN medium access control (MAC) and physical layer (PHY) specifications" un procédé de régulation du trafic dans le réseau sans fil. Ce procédé utilise un système de fenêtres de congestion (Congestion Window"CW") pour réguler ce trafic. Selon cette norme, pour déterminer l'instant où émettre un paquet de données, une station tire un nombre aléatoire au hasard entre 0 et CW-1, la valeur CW étant un entier compris entre deux valeurs CWₘᵢₙ et CWₘₐₓ spécifiées par la norme 802.11.

Cette valeur CW sert de compteur à rebours pour l'émission du paquet, ce compteur étant différé si la station constate qu'une autre station est en train d'émettre. Malheureusement, ce système à fenêtres de congestion génère un nombre important de collisions sur le réseau sans fil, ce qui se traduit, du point de vue de l'utilisateur, par une perte importante de bande passante.

Un autre mécanisme connu sous le nom de "méthode des tournois" est susceptible d'être utilisé par les différentes stations pour réguler les émissions de paquets et limiter le taux de collision. Cette méthode des tournois est décrite dans le document des auteurs Z. Abichar et M. Chang, intitulé " CONTI: Constant Time Contention Resolution for WLAN Access", IFIP Networking 2005.

La méthode des tournois consiste à organiser une sorte de tournoi entre les stations ayant à émettre un paquet. Un tournoi est composé d'un certain nombre de tours de sélection, exécuté chacun pendant un intervalle de temps de durée prédéfinie permettant à chaque station d'avoir le temps d'entendre l'émission de toute autre. Cette durée peut typiquement être égale à la durée de l'intervalle de temps nommé "SlotTime" qui, selon le standard IEEE 802.11, est définie comme intervalle élémentaire dans la procédure de résolution de contention par fenêtre de congestion. Au début du tournoi, toutes les stations ayant à émettre un paquet sont susceptibles d'être autorisées à émettre ce paquet. A chaque tour de sélection, une ou plusieurs stations sont susceptibles d'être supprimées de la liste des stations autorisées à émettre, selon qu'une autorisation ou une interdiction d'émettre leur est attribuée lors de ce tour de sélection. A l'issue du tournoi, seules les stations non éliminées sont autorisées à émettre. Si plusieurs stations restent en lice à l'issue du tournoi, elles émettent en même temps provoquant ainsi une collision et donc une réception perturbée avec impossibilité de recevoir correctement les paquets de données émis. Ces stations devront alors participer au tournoi suivant pour tenter d'émettre à nouveau ces paquets.

La méthode des tournois dans un réseau WLAN permet une utilisation efficace la bande passante et une réduction notable des collisions et temps d'accès, ce qui rend ces réseaux compatibles avec les applications multimédias nécessitant de hauts débits de transmission.

Toutefois l'efficacité de cette méthode est réduite en présence du phénomène de stations cachées. Ce phénomène se présente par exemple lorsque 3 stations A, B, et C sont localisées de telle manière que la station B entend les signaux émis par les stations A et C, mais que ces dernières n'entendent pas les signaux émis par l'autre. Dans une telle situation, si la station A est autorisée à émettre un paquet et émet un signal indiquant son intention d'émettre, la station C n'entendra pas ce signal. En conséquence, si la station C est également autorisée à émettre un paquet, elle va émettre ce paquet, croyant être la seule à émettre un paquet, et provoquera une collision avec le paquet émis par la station A. Un autre exemple se trouve dans le document US2009/213815.

Un des buts de l'invention est de remédier à des problèmes, inconvénients ou insuffisances de l'état de la technique et/ou d'y apporter des améliorations.

L'invention concerne, selon un premier aspect, un procédé de régulation d'émission mis en oeuvre par une station lors d'un tournoi pour l'accès à un réseau de communication sans fil, le procédé comprenant au cours d'un tour de sélection dudit tournoi:
- une étape de réception d'un premier signal, émis par une autre station et indiquant que cette autre station a obtenu lors dudit tour de sélection une autorisation d'émettre un paquet de données,
- une étape d'émission d'un deuxième signal indiquant que ladite station a reçu le premier signal.

Le procédé selon l'invention permet de propager de station en station, l'information selon laquelle une des stations bénéficie d'une autorisation d'émettre un paquet. En conséquence, lorsqu'une station B masque la station A pour la station C, la station C est néanmoins informée de l'autorisation d'émettre dont bénéficie la station A. On évite ainsi des collisions entre les paquets émis par les stations A et C, dans les cas où ces deux stations seraient autorisées à émettre simultanément. Ceci est également bénéfique pour la station B qui pourrait être gênée par une émission indésirable d'une des stations A ou C.

Dans un mode de réalisation, une procédure de départage entre stations est utilisée : elle vise à déterminer quelles stations pourront concourir pour l'accès à ce réseau radio et avec quel mode de tournoi.

Ainsi, dans ce mode de réalisation, préalablement à la mise en oeuvre d'un tournoi, ladite station met en oeuvre une procédure de départage afin de déterminer si ladite station va ou non participer à un tournoi dans lequel toute station recevant ledit premier signal doit émettre ledit deuxième signal.

Une telle procédure de départage fait usage par exemple d'une part, d'un premier type de signaux indiquant qu'une station souhaite participer à un tournoi ou bien à un tournoi avec écho ou bien à un tournoi sans écho, et, d'autre part, d'un deuxième type de signaux indiquant qu'une station a entendu ou non un des signaux du premier type.

Selon une première variante de réalisation du procédé selon l'invention, préalablement à la mise en oeuvre d'un tournoi, ladite station émet un troisième signal signifiant que ladite station souhaite démarrer un tournoi dans lequel toute station recevant ledit premier signal doit émettre ledit deuxième signal. De préférence, préalablement à l'envoi du troisième signal, ladite station émet un signal indiquant que ladite station souhaite participer à un tournoi.

Dans une autre situation, applicable à une station mettant en oeuvre l'invention, préalablement à la mise en oeuvre d'un tournoi, cette station émet un quatrième signal indiquant que ladite station a reçu un troisième signal émis par une autre station signifiant que cette autre station souhaite démarrer un tournoi dans lequel toute station recevant ledit premier signal doit émettre ledit deuxième signal. De préférence, préalablement à l'envoi du quatrième signal, ladite station émet un signal indiquant que ladite station souhaite participer à un tournoi.

Selon une deuxième variante de réalisation, préalablement à la mise en oeuvre d'un tournoi, ladite station émet un quatrième signal indiquant que ladite station n'a pas reçu de troisième signal signifiant qu'une autre station souhaite démarrer un tournoi dans lequel toute station recevant ledit premier signal doit émettre ledit deuxième signal.

Ces différentes procédures de départage permettent que des stations mettant en oeuvre l'invention accèdent au même médium radio que des stations ne mettant pas en oeuvre l'invention, sans qu'il y ait conflit entre ces stations.

Les différents modes de réalisation et variantes mentionnés ci-dessus sont combinables entre eux pour la mise en oeuvre de l'invention.

Corrélativement, l'invention concerne, un dispositif de régulation d'émission, mettant en oeuvre un tournoi pour l'accès à un réseau de communication sans fil, le dispositif comprenant,
- des moyens de réception, lors d'un tour de sélection dudit tournoi, d'un premier signal, émis par un autre dispositif, indiquant que cet autre dispositif a obtenu lors dudit tour de sélection une autorisation d'émettre un paquet,
- des moyens d'émission d'un deuxième signal indiquant que ledit dispositif a reçu le premier signal.

Les avantages énoncés pour le procédé selon l'invention sont transposables directement au dispositif selon l'invention.

Plus généralement, le dispositif selon l'invention comprend des moyens de mise en oeuvre des étapes du procédé selon l'invention. Ce dispositif de régulation d'émission est intégré par exemple dans un équipement de télécommunication de type station d'émission de paquet.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un dispositif de régulation d'émission selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

L'invention a également pour objet un signal, destiné à être émis par un dispositif de régulation d'émission mettant en oeuvre un tournoi pour l'accès à un réseau de communication sans fil, ledit signal indiquant que ledit dispositif a reçu lors d'un tour de sélection dudit tournoi un autre signal, émis par un autre dispositif, indiquant que cet autre dispositif a obtenu lors dudit tour de sélection une autorisation d'émettre un paquet de données.

L'invention vise aussi un support d'informations lisible par un ordinateur ou processeur de données, et comportant un signal selon l'invention.

Le support d'informations peut être n'importe quel moyen matériel, entité ou dispositif, capable de stocker un signal. Par exemple, le support peut comporter un moyen de stockage, tel qu'une mémoire ROM ou RAM, par exemple un disque CD ROM ou encore un moyen d'enregistrement magnétique, par exemple une disquette ("floppy disc" selon la terminologie anglo-saxonne) ou un disque dur d'ordinateur.

D'autre part, le support d'informations peut être un support transmissible sous forme d'onde porteuse tel qu'un signal électromagnétique (signal électrique, radio ou optique), qui peut être acheminé via un moyen de transmission approprié, filaire ou non filaire: câble électrique ou optique, liaison radio ou infrarouge, ou par d'autres moyens.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente un réseau de télécommunication sans fil avec des stations conformes à l'invention dans un mode préféré de réalisation ;
- la figure 2 représente un dispositif de régulation d'émission conforme à l'invention dans un mode préféré de réalisation ;
- la figure 3 représente, sous forme d'organigramme, les principales étapes d'un procédé de régulation d'émission connu dans l'état de la technique ;
- la figure 4 représente, sous forme d'organigramme, les principales étapes d'un procédé de régulation d'émission conforme à l'invention dans un mode préféré de réalisation.

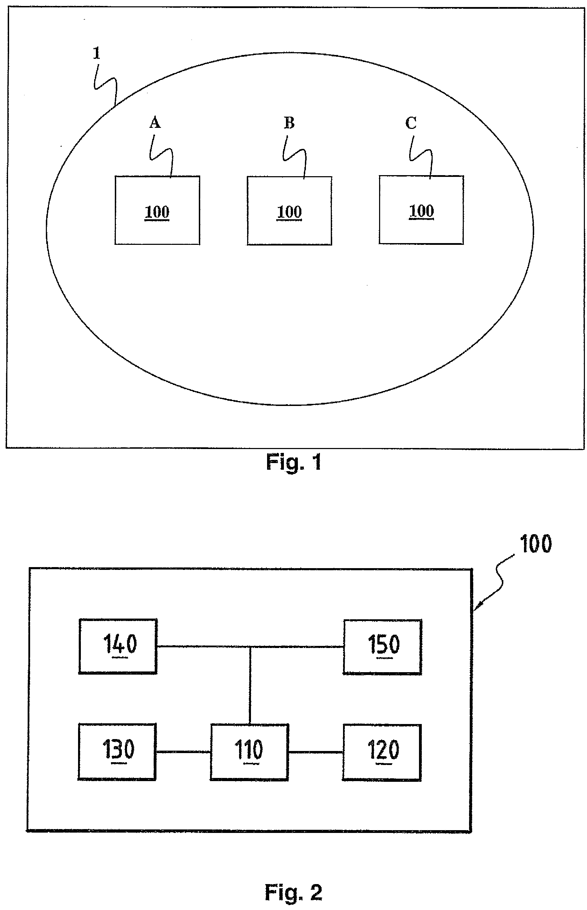

La **figure 1** représente un réseau 1 de télécommunication sans fil dans lequel évoluent des stations A, B, C conformes à l'invention. Chacune de ces stations A, B, C comporte un dispositif 100 de régulation d'émission conforme à l'invention.

Dans le mode illustré à la **figure 2**, le dispositif 100 selon l'invention comporte un processeur 110, une mémoire vive 120, une mémoire morte de type ROM 130, un module 140 d'accès au réseau 1, pour émettre et recevoir des paquets et des signaux dans le réseau de télécommunication sans fil 1 et une table de probabilités 150. Ces différents éléments sont reliés entre eux par un système de bus non référencé. Les moyens 140 pour envoyer et recevoir des paquets de données et des signaux sur le réseau de télécommunication sans fil 1 sont, dans l'exemple décrit ici, constitués par une carte d'accès au réseau 1 conforme à la famille de normes IEEE 802.11.

Pour la mise en oeuvre de l'invention, il est fait usage de la méthode des tournois citée en introduction.

Dans la méthode des tournois, telle que décrite par CONTI dans le document référencé ci-dessus, les autorisations ou interdictions d'émettre sont attribuées aux stations en utilisant des variables aléatoires binaires ayant une loi de distribution de Bernoulli. Cette loi de distribution est définie par une probabilité de tirage d'une autorisation d'émettre. Une telle probabilité est ainsi affectée à chaque station et à chaque tour de sélection. Les probabilités sont choisies de préférence de manière à ce que statistiquement le taux de collision soit le plus faible possible. Une procédure pour choisir les probabilités de façon optimale est présentée dans le document "Analysis and optimization of mac with constant size congestion window for WLAN", par J. Galtier, Proceedings on the Third International Conference on Services and Networks communications", INRIA, Library of Congress Number 2007930108, August 2007.

Selon un mode de réalisation particulier, décrit dans le document de brevet WO2007/051946, les probabilités affectées aux différentes stations lors d'un tour de sélection peuvent être fonction des autorisations ou interdictions d'émettre tirées aux tours de sélection précédents, de manière à minimiser le taux de collision.

Les stations A, B, C comportent chacune un dispositif 100 de régulation d'émission qui permet la mise en oeuvre d'un procédé de régulation d'émission selon l'invention.

Dans la suite de la description les notations suivantes seront utilisées:
- k est l'indice identifiant le tour de sélection au cours d'un tournoi;
- kₘₐₓ est le nombre maximal de tours de sélection pour un tournoi;
- r est une variable aléatoire binaire;
- r(k) est la valeur de la variable aléatoire binaire r tirée au tour de sélection d'indice k; r(k) appartient à l'ensemble {0,1}, la valeur "1" étant représentative usuellement d'une autorisation d'émettre, tandis que la valeur "0" est représentative d'une interdiction d'émettre.

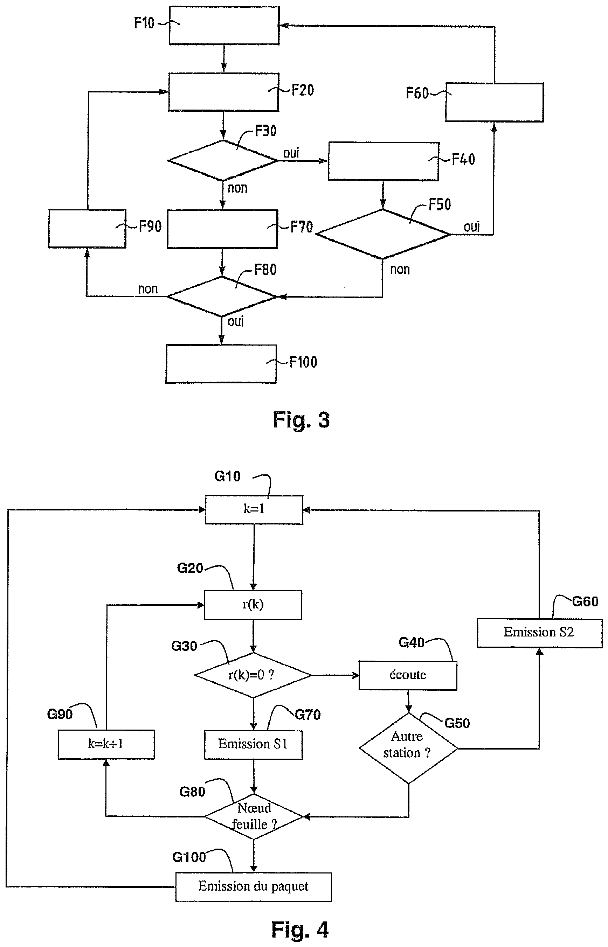

Les principales étapes **F10 à F100** d'un procédé de régulation d'émission selon la méthode connue des tournois sont décrites en référence à la **figure 3**. Ce procédé est mis en oeuvre par le dispositif 100 de régulation d'émission d'une station A, B ou C ayant un paquet de données à émettre à travers le réseau 1. Toutes les stations ayant un paquet de données à émettre, mettent en oeuvre simultanément ce même procédé, sans qu'une concertation ou interrogation mutuelle, autre que ce qui est décrit dans les étapes décrites ci-dessous, soit nécessaire entre ces stations.

Le procédé de régulation d'émission selon la méthode connue des tournois est décrit pour une station B. Il correspond à ce qu'on appelle un tournoi: il est répété par chaque station tant qu'elle a des paquets à émettre. Les stations ayant des paquets à émettre démarrent toutes au même instant la procédure de résolution de contention par mise en oeuvre d'un tournoi, cet instant étant fonction d'un critère analogue à celui utilisé pour le système de fenêtre de congestion selon le standard IEEE 802.11, c'es-à-dire après une période de temps DIFS1 prédéfinie (qui peut être différente de la période de temps DIFS (DCF Inter Frame Space) définie dans la norme 802.11).

Comme déjà indiqué en introduction, un tournoi est composé d'un certain nombre de tours de sélection, exécuté chacun pendant un intervalle de temps de durée prédéfinie permettant à chaque station d'avoir le temps d'entendre l'émission de toute autre.

Au début du tournoi, toutes les stations ayant à émettre un paquet sont susceptibles d'être autorisées à émettre ce paquet. A chaque tour de sélection, une ou plusieurs stations sont susceptibles d'être supprimées de la liste des stations autorisées à émettre, selon qu'une autorisation ou une interdiction d'émettre leur est attribuée lors de ce tour de sélection.

A l'issue du tournoi, seules les stations non éliminées sont autorisées à émettre. Si plusieurs stations restent en lice à l'issue du tournoi, elles émettent en même temps provoquant ainsi une collision et donc une réception perturbée avec impossibilité de recevoir correctement les paquets de données émis. Ces stations devront alors participer au tournoi suivant pour tenter d'émettre à nouveau ces paquets.

Un tour de sélection correspond à l'exécution des étapes F10 à F90 décrites en détail ci-dessous.

Au cours d'une première étape F10, la station B initialise une variable k à la valeur 1, cette variable représentant l'indice du tour de sélection courant.

Cette étape F10 d'initialisation est suivie par une étape F20 de tirage d'une valeur r(k) d'une variable aléatoire binaire r, associée à la station pour le tour de sélection courant d'indice k. La probabilité pour que cette variable aléatoire binaire r(k) prenne, au tour de sélection d'indice k, la valeur prédéterminée « 1 » est notée p(k). - Selon un mode de réalisation, cette probabilité p(k) dépend des valeurs tirées aux tours de sélection précédents. La probabilité pour que cette variable aléatoire binaire r(k) prenne, au tour k, la valeur prédéterminée « 0 » est donc (1-p(k)).

Cette étape F20 de tirage d'une valeur de variable aléatoire est suivie par une étape F30 au cours de laquelle on vérifie si la valeur binaire r(k) tirée est égale à "0".

Si tel est le cas (cas d'une interdiction d'émettre), ce test F30 est suivi par une étape F40 au cours de laquelle la station B écoute le réseau de télécommunication sans fil pour déterminer si une autre station A ou C a émis un signal S1 indiquant que cette autre station A ou C est autorisée à émettre un paquet de données.

Si un tel signal S1 est détecté (résultat du test de l'étape F50 positif), le procédé se termine par l'étape F60, sans que la station B ait émis son paquet de données. Au cours de cette étape F60, la station B attend la fin des tours de sélection et l'émission éventuelle d'un paquet par une autre station A ou C avant d'exécuter à nouveau l'étape F10 d'initialisation déjà décrite.

En revanche, si à l'étape F40 aucun signal S1 n'est détecté (résultat du test de l'étape F50 négatif), ce test est suivi par un test à l'étape F80 au cours duquel on détermine si le tour k est le dernier tour de sélection, ce qui revient à vérifier si la variable k est égale à la valeur kₘₐₓ. Si tel est le cas, la station B émet son paquet de données au cours d'une étape F100.

En revanche, si k est strictement inférieur à kₘₐₓ, le résultat du test de l'étape F80 est négatif. Cette étape est alors suivie par une étape F90 au cours de laquelle on incrémente la valeur de la variable k d'une unité, en vue de l'exécution du tour de sélection suivant.

Si au cours du test de l'étape F30, il est déterminé que la valeur binaire tirée est égale à la valeur prédéterminée 1 (cas d'une autorisation d'émettre), ce test F30 est suivi par une étape **F70** d'émission d'un signal indiquant que la station B désire émettre un paquet de données sur le réseau.

Cette étape **F70** d'émission d'un signal est suivie par l'étape **F80** déjà décrite au cours de laquelle on vérifie si le tour de sélection courant k est le dernier tour de sélection. Si tel est le cas, ce test **F80** est suivi par l'étape **F100** d'émission du paquet de données par la station B. En revanche, si tel n'est pas le cas, ce test **F80** est suivi par l'étape **F90** d'incrémentation déjà décrite.

L'étape **F90** d'incrémentation est suivie par une nouvelle exécution des étapes F20 à F80 déjà décrites, pour le tour de sélection suivant et selon la logique d'enchaînement des étapes qui vient d'être décrite.

Le procédé et le dispositif selon l'invention sont maintenant décrits plus en détail. Les principales étapes **G10 à G100** d'un procédé de régulation d'émission selon l'invention sont décrites en référence à la **figure 4****.**

Ce procédé utilise également la méthode des tournois, mais certaines des étapes F10 à F100 décrites ci-dessus sont modifiées: il s'agit de l'étape F60 qui est remplacée par une étape G60, les autres étapes G10 à G100 étant identiques respectivement aux étapes F10 à F100 décrites au regard de la figure 3.

A l'étape G60, lorsqu'une station B n'a pas tiré d'autorisation d'émettre (r(k)=0 à l'étape G30) et que, à l'étape G50, la station B a détecté l'émission d'un signal S1, représentatif d'une intention d'émettre d'une autre station (A par exemple), la station B émet un signal S2 indiquant que la station B a détecté un tel signal S1. En quelque sorte, le signal S2 émis à l'étape G60 par la station B fait "écho" au signal S1 émis par la station A à l'étape G70.

Dans l'invention, deux signaux S1 et S2 sont ainsi utilisés:
- un signal S1 qui indique que la station émettant ce signal a tiré une autorisation d'émettre et a l'intention d'émettre un paquet;
- un signal S2, distinct du signal S1, qui indique que la station émettant ce signal a détecté l'émission par une autre station d'un signal S1 : ce signal S2 fait en quelque sorte écho au signal S1 car il sert à propager l'information donnée par le signal S1.

En conséquence, si les trois stations A, B et C participent à un même tournoi, la station B cachant la station A à la station C et réciproquement la station C à la station A: si la station A bénéficie d'une autorisation d'émettre et émet un signal S1, C ne pourra détecter ce signal S1. Par contre, la station C pourra détecter le signal S2 faisant écho au signal S1: la station C est donc informée par la station B qu'une autre station (A en l'occurrence) a émis un signal S1.

Dans la suite de la description, on parlera de "tournoi avec écho" lorsque, au cours d'un tel tournoi, toute station recevant le signal S1 doit émettre le signal S2. De la même manière, on parlera de "tournoi sans écho", lorsque, au cours d'un tel tournoi, une station recevant le signal S1 n'émet pas de signal S2.

Il est possible que, parmi les stations accédant à un même réseau radio, se trouve deux catégories de stations: d'une part, des stations mettant en oeuvre la méthode des tournois avec ou sans écho (catégorie 1) et, d'autre part, des stations ne mettant pas en oeuvre la méthode des tournois, mais fonctionnant selon ce qui est spécifié dans la norme 802.11a, b, g ou n (catégorie 2).

En outre, dans la catégorie 1, peuvent se trouver: d'une part, des stations (catégorie 1A) souhaitant mettre en oeuvre un tournoi avec écho, et, d'autre part, des stations (catégorie 1B) ne souhaitant pas mettre en oeuvre un tournoi avec écho, mais uniquement un tournoi sans écho, mais susceptibles en cas de besoin de mettre en oeuvre un tournoi avec écho.

Dans une telle situation, l'invention prévoit une procédure de départage entre stations, visant à déterminer quelles stations pourront concourir pour l'accès à ce réseau radio et avec quel mode de tournoi. A l'issue de cette procédure de départage une station soit participera au tournoi en mode sans écho, soit participera au tournoi en mode sans écho, soit encore ne participera pas au tournoi et ne pourra donc émettre de paquet.

A ce propos, il est possible de rencontrer des situations dans lesquelles une station est à la fois à portée de voix de stations mettant en oeuvre un tournoi avec écho et à portée de voix de stations mettant en oeuvre un tournoi sans écho. Dans ce cas, le comportement de la station n'est pas spécifié et pourra dépendre de décisions d'implémentation pour optimiser les performances en fonction de l'estimation de l'état du système. Dans une telle situation, il peut être décidé par exemple que la station ne participera pas à un tournoi, afin ne pas perturber les stations voisines.

Dans une première variante de la procédure de départage, on définit deux signaux S3 et S4, qui sont choisis distincts l'un de l'autre.

Le signal S3 est utilisé par une station pour signifier qu'elle souhaite démarrer un tournoi avec écho. Le signal S4 est utilisé par une station pour signifier qu'elle n'a pas entendu de signal S3 émis par une autre station.

Ces signaux S3 et S4 sont émis pendant deux intervalles de temps successifs T1 et T2.

Pendant le premier intervalle T1 :
- une station de catégorie 1B, c'est-à-dire qui souhaite démarrer un tournoi sans écho, écoute le canal radio;
- une station de catégorie 1A, c'est-à-dire qui souhaite démarrer un tournoi avec écho, émet le signal S3;

Pendant le deuxième intervalle T2:
- une station de catégorie 1, qui a entendu le signal S3 pendant le premier intervalle T1, n'émet pas de signal;
- une station de catégorie 1B qui n'a pas entendu le signal S3, émet le signal S4.

A la suite de ces échanges, une station qui a émis un signal S3 pendant le premier intervalle T1 et qui n'a pas reçu de signal S4 pendant le deuxième intervalle T2 participera à un même tournoi avec écho (étapes G10 à G100). Une station de catégorie 1B qui a entendu le signal S3 pendant le premier intervalle pourra, si elle le souhaite, participer à ce même tournoi en mettant en oeuvre un tournoi avec écho. Les stations de catégorie 2 ne participeront pas à ce tournoi.

Si une station de catégorie 1B n'a pas reçu de signal S3 pendant le premier intervalle T1 et a émis le signal S4 pendant le deuxième intervalle, alors elle participera à un tournoi sans écho (étapes F10 à F100). Les stations de catégorie 1A n'ayant pas émis de signal S3 ni de signal S4, pourront, si elles le souhaitent, participer à ce même tournoi en mettant en oeuvre un tournoi sans écho. Les stations de catégorie 2 ne participeront pas à ce tournoi.

Dans une deuxième variante de la procédure de départage, on définit trois signaux S3b, S4b et S5b qui sont choisis distincts les uns des autres.

Le signal S3b est utilisé par une station pour signifier qu'elle souhaite démarrer un tournoi, avec ou sans écho. Le signal S4b est utilisé par une station pour signifier qu'elle souhaite démarrer un tournoi avec écho. Le signal S5b est utilisé par une station pour signifier qu'elle a entendu un signal S4b émis par une autre station.

Dans cette deuxième variante, les signaux S3b, S4b, S5b sont émis pendant trois intervalles de temps successifs T1, T2 et T3.

Pendant le premier intervalle T1 une station de catégorie 1A ou 1B, c'est-à-dire qui souhaite démarrer un tournoi avec ou sans écho, émet le signal S3b.

Pendant le deuxième intervalle T2:
- une station de catégorie 1A, c'est-à-dire qui souhaite démarrer un tournoi avec écho, émet le signal S4b;
- une station de catégorie 1B, c'est-à-dire qui souhaite démarrer un tournoi sans écho, écoute le canal radio;

Pendant le troisième intervalle T3, une station de catégorie 1, ayant entendu un signal S4b peut émettre le signal S5b.

A la suite de ces échanges, une station qui a émis un signal S4b pendant le deuxième intervalle T2 ou un signal S5b pendant le troisième intervalle T3, peut participer à un même tournoi, qui sera un tournoi avec écho (étapes G10 à G100). Les stations de catégorie 1B respectant ces conditions, pourront, si elles le souhaitent, participer à ce même tournoi en mettant en oeuvre un tournoi avec écho. Les stations de catégorie 2 ne participeront pas à ce tournoi. En particulier, une station de catégorie 1B, qui aurait entendu le signal S4b (donc située à portée de voix d'une station de catégorie 1A) sans émettre le signal S5b, ne participerait pas à ce tournoi.

Une station qui n'a pas émis de signal S4b pendant le deuxième intervalle T2, qui n'a pas entendu de signal S4b pendant le deuxième intervalle T2 ni de signal S5b pendant le troisième intervalle T3, qui a émis ou entendu le signal S3b pendant le premier intervalle T1 pourra participer à un même tournoi, qui sera un tournoi sans écho (étapes F10 à F100). Les stations de catégorie 1A n'ayant pas émis de signal S4b ni de signal S5b, pourront, si elles le souhaitent, participer à ce même tournoi en mettant en oeuvre un tournoi sans écho. Les stations de catégorie 2 ne participeront pas à ce tournoi.

Une station qui n'a pas entendu de signal S4b pendant l'intervalle T2 et a entendu le signal S5b pendant l'intervalle T3 peut être à l'intersection d'une zone de tournoi avec écho et d'une zone de tournoi sans écho. Cette station soit participera à un tournoi avec écho, soit ne participera pas à un tournoi.

Dans les deux variantes, l'intervalle de temps T1 est choisi de préférence de telle sorte que l'émission d'un signal S3 ou S3b pendant cet intervalle permet aussi d'éviter l'émission d'un paquet par une station de la catégorie 2, qui croira que le signal S3 ou S3b correspond à une émission de paquet. L'intervalle T1 de temps est par exemple choisi de durée D inférieure à DIFS et débute à la dernière émission d'un paquet.

En généralisant les principes de ces deux variantes, la procédure de départage fait usage d'une part, d'un premier type de signaux indiquant qu'une station souhaite participer à un tournoi ou bien à un tournoi avec écho ou bien à un tournoi sans écho, et, d'autre part, d'un deuxième type de signaux indiquant qu'une station a entendu ou non un des signaux du premier type. Les intervalles dans lesquels ces signaux sont émis peuvent être plus ou moins nombreux et l'ordre d'émission de ces signaux peut varier, l'essentiel étant de pouvoir déterminer si un protocole à tournoi sera utilisé ou non, et si ce protocole sera avec écho ou non. Toute méthode qui, par dichotomie ou selon une autre logique, permet, à partir des signaux du premier et du deuxième type, de déterminer quelle est la catégorie des autres stations à portée de voix et quel est le tournoi à mettre en oeuvre entre ces stations, est donc également envisageable pour la mise en oeuvre de la procédure de départage.

A cet endroit, il peut en outre être fait usage de règles supplémentaires pour départager les stations dans les situations non résolues par la simple écoute et/ou émission de signaux du premier ou du deuxième type. Par exemple, en imposant qu'un tournoi avec écho soit prioritaire par rapport à un tournoi sans écho ou vice-versa, dans les situations où au moins une station est à la fois à portée de voix de stations mettant en oeuvre un tournoi avec écho et à portée de voix de stations mettant en oeuvre un tournoi sans écho.

L'invention est applicable aux réseaux WLAN et plus généralement aux réseaux CSMA/CA. Elle est particulièrement intéressante à utiliser dans les contextes où de nombreuses stations partagent l'accès au canal radio ou dans le cas où l'on souhaite véhiculer du trafic voix ou vidéo.

Un autre cas où l'application de l'invention sera particulièrement bénéfique est dans le cas de réseaux 802.11 maillés (en anglais "mesh"), c'est-à-dire où une ou plusieurs stations relaient le trafic des autres parce que leurs portées sont insuffisantes. Dans ce dernier cas les risques de phénomène de stations cachées sont élevés et l'invention permettra d'obtenir malgré tout de bonnes performances.

## Revendications

1. Procédé de régulation d'émission, mis en oeuvre par une station (B) lors d'un tournoi entre des stations (A, B, C) pour accéder à un réseau de communication sans fil, le procédé comprenant, au cours d'un tour de sélection dudit tournoi où des autorisations ou interdictions d'émettre sont attribuées à chaque station (A, B, C) à partir de variables aléatoires binaires ayant une loi de distribution de Bernoulli:
- une étape de réception (G40) d'un premier signal (S1), émis par une autre station (A, C) et indiquant que cette autre station (A, C) a obtenu lors dudit tour de sélection une autorisation d'émettre un paquet de données,
- une étape d'émission (G60) d'un deuxième signal (S2) indiquant que ladite station (B) a reçu le premier signal, le deuxième signal servant à propager l'information donnée par le premier signal vers une autre station (A, C).

2. Procédé selon la revendication 1, dans lequel, préalablement à la mise en oeuvre d'un tournoi, ladite station met en oeuvre une procédure de départage afin de déterminer si ladite station va ou non démarrer un tournoi dans lequel toute station recevant ledit premier signal doit émettre ledit deuxième signal.

3. Procédé selon la revendication 1, dans lequel, préalablement à la mise en oeuvre d'un tournoi, ladite station émet un troisième signal (S3, S4b) signifiant que ladite station souhaite démarrer un tournoi, dans lequel toute station recevant ledit premier signal doit émettre ledit deuxième signal.

4. Procédé selon la revendication 1, dans lequel, préalablement à la mise en oeuvre d'un tournoi, ladite station émet un quatrième signal (S5b) indiquant que ladite station a reçu un troisième signal (S4b) émis par une autre station signifiant que cette autre station souhaite démarrer un tournoi dans lequel toute station recevant ledit premier signal doit émettre ledit deuxième signal.

5. Procédé selon la revendication 3, dans lequel, préalablement à l'envoi du troisième signal (S4b), ladite station émet un signal (S3b) indiquant que ladite station souhaite participer à un tournoi.

6. Procédé selon la revendication 4, dans lequel, préalablement à l'envoi du quatrième signal (S5b), ladite station émet un signal (S3b) indiquant que ladite station souhaite participer à un tournoi.

7. Procédé selon la revendication 1, dans lequel, préalablement à la mise en oeuvre d'un tournoi, ladite station émet un quatrième signal (S4) indiquant que ladite station n'a pas reçu de troisième signal (S3) signifiant qu'une autre station souhaite démarrer un tournoi dans lequel toute station recevant ledit premier signal doit émettre ledit deuxième signal.

8. Support d'enregistrement lisible par un processeur de données sur lequel est enregistré un programme comprenant des instructions de code de programme pour l'exécution des étapes d'un procédé selon l'une des revendications 1 à 7.

9. Dispositif (100) de régulation d'émission, mettant en oeuvre un tournoi entre des dispositifs pour accéder à un réseau de communication sans fil, le dispositif comprenant :
- des moyens de réception (140), lors d'un tour de sélection dudit tournoi au cours duquel des autorisations ou interdictions d'émettre sont attribuées à chaque dispositif à partir de variables aléatoires binaires ayant une loi de distribution de Bernoulli, d'un premier signal (S1), émis par un autre dispositif, indiquant que cet autre dispositif a obtenu lors dudit tour de sélection une autorisation d'émettre un paquet de données,
- des moyens d'émission (140) d'un deuxième signal (S2) indiquant que ledit dispositif a reçu le premier signal, le deuxième signal servant à propager l'information donnée par le premier signal vers un autre dispositif.

10. Dispositif (100) selon la revendication 9, comprenant des moyens pour, préalablement à la mise en oeuvre d'un tournoi, émettre un troisième signal signifiant que ledit dispositif souhaite démarrer un tournoi, dans lequel toute dispositif recevant ledit premier signal doit émettre ledit deuxième signal.

11. Signal, destiné à être émis par un dispositif (100) de régulation d'émission mettant en oeuvre un tournoi entre des dispositifs pour accéder à un réseau de communication sans fil, ledit signal indiquant que ledit dispositif a reçu lors d'un tour de sélection dudit tournoi, au cours duquel des autorisations ou interdictions d'émettre sont attribuées à chaque dispositif à partir de variables aléatoires binaires ayant une loi de distribution de Bernoulli, un autre signal, émis par un autre dispositif, indiquant que cet autre dispositif a obtenu lors dudit tour de sélection une autorisation d'émettre un paquet de données, le deuxième signal servant à propager l'information donnée par le premier signal vers un autre dispositif.

## Patentansprüche

1. Verfahren zur Senderegelung, das von einer Station (B) während eines Turniers zwischen Stationen (A, B, C) für den Zugang zu einem drahtlosen Kommunikationsnetz implementiert wird, wobei das Verfahren während einer Auswahlrunde des Turniers, in der jeder Station (A, B, C) ausgehend von binären Zufallsvariablen, die eine Bernoulli-Verteilung aufweisen, Genehmigungen oder Verbote zum Senden zugeordnet werden, Folgendes umfasst:
- einen Schritt zum Empfangen (G40) eines ersten Signals (S1), das von einer anderen Station (A, C) gesendet wird und anzeigt, dass diese andere Station (A, C) während der Auswahlrunde eine Berechtigung zum Senden eines Datenpakets erhalten hat,
- einen Schritt zum Senden (G60) eines zweiten Signals (S2), das anzeigt, dass die Station (B) das erste Signal empfangen hat, wobei das zweite Signal dazu dient, die vom ersten Signal gegebene Information an eine andere Station (A, C) weiterzuleiten.

2. Verfahren nach Anspruch 1, wobei die Station vor der Implementierung eines Turniers ein Entscheidungsverfahren implementiert, um zu bestimmen, ob die Station ein Turnier startet oder nicht, bei dem jede Station, die das erste Signal empfängt, das zweite Signal senden muss.

3. Verfahren nach Anspruch 1, wobei die Station vor der Implementierung eines Turniers ein drittes Signal (S3, S4b) sendet, das anzeigt, dass die Station ein Turnier starten möchte, bei dem jede Station, die das erste Signal empfängt, das zweite Signal senden muss.

4. Verfahren nach Anspruch 1, wobei die Station vor der Implementierung eines Turniers ein viertes Signal (S5b) sendet, das anzeigt, dass die Station ein drittes Signal (S4b) empfangen hat, das von einer anderen Station gesendet wurde und anzeigt, dass diese andere Station ein Turnier starten möchte, bei dem jede Station, die das erste Signal empfängt, das zweite Signal senden muss.

5. Verfahren nach Anspruch 3, wobei die Station vor dem Senden des dritten Signals (S4b) ein Signal (S3b) sendet, das anzeigt, dass die Station an einem Turnier teilnehmen möchte.

6. Verfahren nach Anspruch 4, wobei die Station vor dem Senden des vierten Signals (S5b) ein Signal (S3b) sendet, das anzeigt, dass die Station an einem Turnier teilnehmen möchte.

7. Verfahren nach Anspruch 1, wobei die Station vor der Implementierung eines Turniers ein viertes Signal (S4) sendet, das anzeigt, dass die Station kein drittes Signal (S3) empfangen hat, das anzeigt, dass eine andere Station ein Turnier starten möchte, bei dem jede Station, die das erste Signal empfängt, das zweite Signal senden muss.

8. Von einem Datenprozessor lesbares Speichermedium, auf dem ein Programm gespeichert ist, das Programmcode-Anweisungen zum Ausführen der Schritte eines Verfahrens nach einem der Ansprüche 1 bis 7 umfasst.

9. Vorrichtung (100) zur Senderegelung, die ein Turnier zwischen Vorrichtungen für den Zugang zu einem drahtlosen Kommunikationsnetz implementiert, wobei die Vorrichtung umfasst:
- Mittel zum Empfangen (140), während einer Auswahlrunde des Turniers, in der jeder Vorrichtung ausgehend von binären Zufallsvariablen, die eine Bernoulli-Verteilung aufweisen, Genehmigungen oder Verbote zum Senden zugeordnet werden, eines ersten Signals (S1), das von einer anderen Vorrichtung gesendet wird und anzeigt, dass diese andere Vorrichtung während der Auswahlrunde eine Berechtigung zum Senden eines Datenpakets erhalten hat,
- Mittel zum Senden (140) eines zweiten Signals (S2), das anzeigt, dass die Vorrichtung das erste Signal empfangen hat, wobei das zweite Signal dazu dient, die vom ersten Signal gegebene Information an eine andere Vorrichtung weiterzuleiten.

10. Vorrichtung (100) nach Anspruch 9, die Mittel umfasst, um vor der Implementierung eines Turniers ein drittes Signal zu senden, das anzeigt, dass die Vorrichtung ein Turnier starten möchte, bei dem jede Vorrichtung, die das erste Signal empfängt, das zweite Signal senden muss.

11. Signal, das dazu vorgesehen ist, von einer Vorrichtung (100) zur Senderegelung, die ein Turnier zwischen Vorrichtungen für den Zugang zu einem drahtlosen Kommunikationsnetz implementiert, gesendet zu werden, wobei das Signal anzeigt, dass die Vorrichtung während einer Auswahlrunde des Turniers, in der jeder Vorrichtung ausgehend von binären Zufallsvariablen, die eine Bernoulli-Verteilung aufweisen, Genehmigungen oder Verbote zum Senden zugeordnet werden, ein anderes Signal empfangen hat, das von einer anderen Vorrichtung gesendet wurde und anzeigt, dass diese andere Vorrichtung während der Auswahlrunde eine Berechtigung zum Senden eines Datenpakets erhalten hat, wobei das zweite Signal dazu dient, die vom ersten Signal gegebene Information an eine andere Vorrichtung weiterzuleiten.

## Claims

1. Method for regulating emission, implemented by a station (B) during a tournament between stations (A, B, C) to access a wireless communication network, the method comprising, in the course of a selection round of said tournament where permissions or prohibitions to emit are allocated to each station (A, B, C) on the basis of binary random variables having a Bernoulli distribution law:
- a step (G40) of receiving a first signal (S1), emitted by another station (A, C) and indicating that this other station (A, C) has obtained during said selection round a permission to emit a data packet,
- a step (G60) of emitting a second signal (S2) indicating that said station (B) has received the first signal, the second signal serving to propagate the information given by the first signal to another station (A, C).

2. Method according to Claim 1, in which, prior to the implementation of a tournament, said station implements a casting decision procedure so as to determine whether said station will or will not start a tournament in which any station receiving said first signal must emit said second signal.

3. Method according to Claim 1, in which, prior to the implementation of a tournament, said station emits a third signal (S3, S4b) signifying that said station wishes to start a tournament, in which any station receiving said first signal must emit said second signal.

4. Method according to Claim 1, in which, prior to the implementation of a tournament, said station emits a fourth signal (S5b) indicating that said station has received a third signal (S4b) emitted by another station signifying that this other station wishes to start a tournament in which any station receiving said first signal must emit said second signal.

5. Method according to Claim 3, in which, prior to the dispatching of the third signal (S4b), said station emits a signal (S3b) indicating that said station wishes to participate in a tournament.

6. Method according to Claim 4, in which, prior to the dispatching of the fourth signal (S5b), said station emits a signal (S3b) indicating that said station wishes to participate in a tournament.

7. Method according to Claim 1, in which, prior to the implementation of a tournament, said station emits a fourth signal (S4) indicating that said station has not received any third signal (S3) signifying that another station wishes to start a tournament in which any station receiving said first signal must emit said second signal.

8. Recording medium readable by a data processor on which is recorded a program comprising program code instructions for the execution of the steps of a method according to one of Claims 1 to 7.

9. Device (100) for regulating emission, implementing a tournament between devices to access a wireless communication network, the device comprising:
- means (140) for receiving, during a selection round of said tournament in the course of which permissions or prohibitions to emit are allocated to each device on the basis of binary random variables having a Bernoulli distribution law, a first signal (S1), emitted by another device, indicating that this other device has obtained during said selection round a permission to emit a data packet,
- means (140) for emitting a second signal (S2) indicating that said device has received the first signal, the second signal serving to propagate the information given by the first signal to another device.

10. Device (100) according to Claim 9, comprising means for, prior to the implementation of a tournament, emitting a third signal signifying that said device wishes to start a tournament, in which any device receiving said first signal must emit said second signal.

11. Signal, intended to be emitted by a device (100) for regulating emission implementing a tournament between devices to access a wireless communication network, said signal indicating that said device has received during a selection round of said tournament, in the course of which permissions or prohibitions to emit are allocated to each device on the basis of binary random variables having a Bernoulli distribution law, another signal, emitted by another device, indicating that this other device has obtained during said selection round a permission to emit a data packet, the second signal serving to propagate the information given by the first signal to another device.
